(19) Europäisches Patentamt
European Patent Office
Office européen des brevets

(11) EP 2 487 647 A1

(12) EUROPEAN PATENT APPLICATION
published in accordance with Art. 153(4) EPC

(43) Date of publication:
15.08.2012 Bulletin 2012/33

(21) Application number: 10821959.3

(22) Date of filing: 04.10.2010

(51) Int Cl.:
G06T 7/00 (2006.01)          G06T 1/00 (2006.01)
G08G 1/16 (2006.01)          H04N 7/18 (2006.01)

(86) International application number:
PCT/JP2010/067354

(87) International publication number:
WO 2011/043289 (14.04.2011 Gazette 2011/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.10.2009 JP 2009235535

(71) Applicant: Clarion Co., Ltd.
Bunkyo-ku
Tokyo 112-8608 (JP)

(72) Inventor: ISHII, Katsuichi
Tokyo 112-8608 (JP)

(74) Representative: Köhler, Walter
Louis, Pöhlau, Lohrentz
Patentanwälte
P.O. Box 30 55
90014 Nürnberg (DE)

(54) **PEDESTRIAN DETECTION SYSTEM**

(57) Disclosed is a pedestrian detection system including a pedestrian detection device (20) for detecting pedestrians based on an image captured and obtained by an infrared camera (10). The pedestrian detection device (20) includes: a correlation value detection unit for performing matching between the image and pre-stored templates for outlines of pedestrians, and obtaining correlation values with the templates; a high correlation region detection unit for detecting image regions in the image as pedestrian candidates, the image regions each having the correlation value indicating a high probability that the image region is a pedestrian; and a selection unit for obtaining an average value of height of a plurality of pedestrian candidates as appears on the image, determining whether each pedestrian candidate is suitable or not on the basis of the average value and the height of the each pedestrian candidate as appears on the image, and performing selection processing for excluding unsuitable candidates from the pedestrian candidates.

## FIG.1

EP 2 487 647 A1

**Description**

TECHNICAL FIELD

The present invention relates to a pedestrian detection system for detecting the presence of a pedestrian around a vehicle.

BACKGROUND ART

The realization of the following system has heretofore been studied. Specifically, the system is provided with an infrared camera for capturing images in a vehicle traveling direction. The system detects the presence of a pedestrian from an image obtained by the infrared camera, and is capable of presenting pedestrian portions of the images to a driver by superimposing markers thereon, automatically recognizing the danger such as the pedestrian coming too close to the vehicle and alerting the driver in case of danger, or avoiding the danger by braking or turning with an autopilot system of the vehicle.

For example, Japanese Patent Application Publication No. 2003-9140 discloses a pedestrian detection system using so-called "pattern matching" for detection of the pedestrians, in which templates for outlines of the pedestrians are prepared in advance and similarities (correlation values) between the templates and areas where the pedestrian may exist in the image are obtained.

DISCLOSURE OF INVENTION

In the conventional pedestrian detection system as described above, so-called calibration processing is required to improve the detection accuracy. In the calibration processing, an image processing device for processing images captured by the camera specifies and corrects errors in the position of the pedestrian, for example. In this case, determination including temporal elements has to deal with moving image processing. Thus, it is difficult to carry out such determination due to constraints on the entire system, such as processing speed.

It is an object of the present invention to provide a pedestrian detection system capable of improving detection accuracy of the position of a pedestrian and the like.

A pedestrian detection system according to one embodiment of the present invention to achieve the foregoing object includes an imaging device installed in a vehicle to capture images in a traveling direction of the vehicle, and a pedestrian detection device for detecting pedestrians based on an image captured and obtained by the imaging device. The pedestrian detection device includes a correlation value detection unit for performing matching between the image obtained by the imaging device and a pre-stored template for an outline of a pedestrian, and obtaining a correlation value with the templates, a high correlation region detection unit for detecting image regions in the image obtained by the imaging device as pedestrian candidates, the image regions each having the correlation value indicating a high probability that the image region is a pedestrian, and a selection unit for obtaining an average value of height of a plurality of pedestrian candidates as appears on the image, determining whether or not each pedestrian candidate is suitable on the basis of the average value and the height of the each pedestrian candidate as appears on the image, and performing selection processing for excluding unsuitable pedestrian candidates from the pedestrian candidates.

BRIEF DESCRIPTION OF THE DRAWINGS

FIG. 1 is a block diagram showing a pedestrian detection system according to a first embodiment of the present invention.
FIG. 2 is a block diagram showing a configuration of a pedestrian detection device in the pedestrian detection system according to the first embodiment.
FIG. 3 is an explanatory diagram showing an example of first, second and third templates and an image used in the pedestrian detection system according to the first embodiment.
FIG. 4 is an explanatory diagram showing a correlation among "distance" between a pedestrian and an infrared camera, "size" as appears on the screen and "height position" as appears on the screen in the pedestrian detection system according to the first embodiment.
FIG. 5 is a block diagram showing a correlation value detection unit in the pedestrian detection system according to the first embodiment.
FIG. 6A is an explanatory diagram showing a list of pedestrian candidates obtained based on a correlation value by the correlation value detection unit and a correlation region maximum value detection unit in the pedestrian detection system according to the first embodiment.

FIG. 6B is an explanatory diagram showing correlation values arranged in descending order and unsuitable correlation values in the correlation value detection unit and the correlation region maximum value detection unit in the pedestrian detection system according to the first embodiment.

FIG. 6C is an explanatory diagram showing data on a list of final pedestrian candidates in the correlation value detection unit and the correlation region maximum value detection unit in the pedestrian detection system according to the first embodiment.

FIG. 7 is an explanatory diagram showing an example where positions of the listed pedestrian candidates are indicated by squares on the image in the pedestrian detection system according to the first embodiment.

FIG. 8 is a flowchart showing the flow of selection processing by a selection unit in the pedestrian detection system according to the first embodiment.

FIG. 9A is an explanatory diagram showing pedestrian candidates obtained based on a correlation value with the first template in the pedestrian detection system according to the first embodiment.

FIG. 9B is an explanatory diagram showing pedestrian candidates obtained based on a correlation value with the second template in the pedestrian detection system according to the first embodiment.

FIG. 9C is an explanatory diagram showing pedestrian candidates obtained based on a correlation value with the third template in the pedestrian detection system according to the first embodiment.

FIG. 10 is an explanatory diagram of difference set values between reference lines in a pedestrian detection system according to a second embodiment.

FIG. 11 is a flowchart showing the overall flow of selection processing in the pedestrian detection system according to the second embodiment.

FIG. 12 is a flowchart showing the flow of overall reference line calculation processing in the pedestrian detection system according to the second embodiment.

FIG. 13 is a flowchart showing the flow of exclusion processing in the pedestrian detection system according to the second embodiment.

FIG. 14 is a flowchart showing the overall flow of selection processing in a pedestrian detection system according to a third embodiment.

FIG. 15 is a flowchart showing the flow of processing of calculating an overall reference line in the selection processing performed in the pedestrian detection system according to the third embodiment.

FIG. 16A is an explanatory diagram showing pedestrian candidates having large correlation values with the first template in the pedestrian detection system according to the third embodiment.

FIG. 16B is an explanatory diagram showing pedestrian candidates having large correlation values with the second template in the pedestrian detection system according to the third embodiment.

FIG. 16C is an explanatory diagram showing pedestrian candidates having large correlation values with the third template in the pedestrian detection system according to the third embodiment.

FIG. 17 is an explanatory diagram showing a correlation among "distance" between a pedestrian and an infrared camera, "size" as appears on the screen and "height position" as appears on the screen in a pedestrian detection system according to a fourth embodiment.

FIG. 18 is an explanatory diagram showing an example of an image captured by the infrared camera in the pedestrian detection system according to the fourth embodiment.

FIG. 19 is a flowchart showing the flow of selection processing in the pedestrian detection system according to the fourth embodiment.

FIG. 20 is an explanatory diagram of a relationship between an overall reference line and pedestrian candidates, each determined to be a child, in a pedestrian detection system according to a fifth embodiment.

MODES FOR CARRYING OUT THE INVENTION

With reference to the accompanying drawings, preferred embodiments of the present invention are described in detail below.

<First Embodiment>

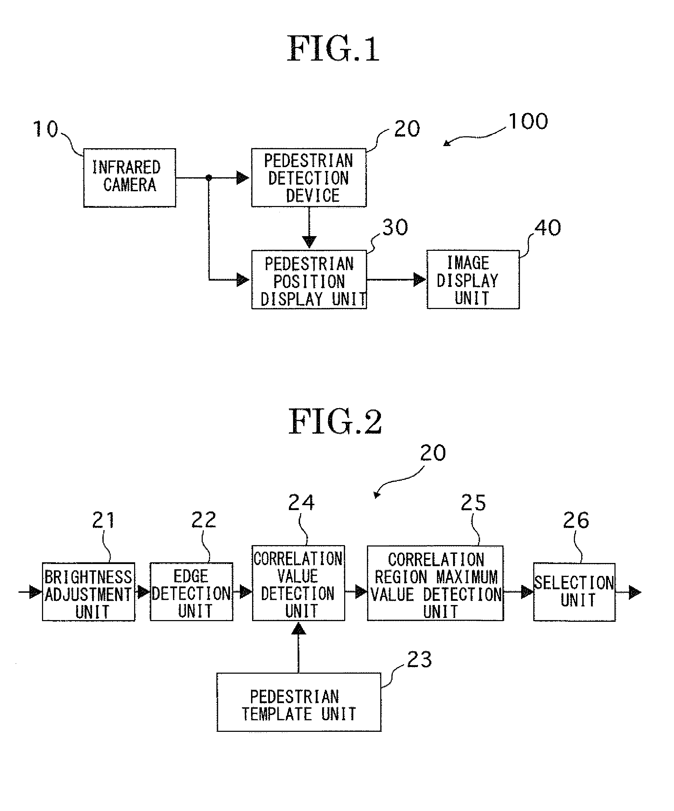

FIG. 1 shows a pedestrian detection system 100 according to a first embodiment of the present invention. The pedestrian detection system 100 includes an imaging device 10, a pedestrian detection device 20, a pedestrian position display unit 30 and an image display unit 40. The imaging device 10 is an infrared camera, for example, in the embodiment shown in FIG. 1.

The infrared camera 10 is installed in a vehicle (not shown) to capture images around the vehicle, e.g., of a predetermined region in a vehicle traveling direction. The traveling direction means the vehicle front in the following description, but may be the vehicle rear, vehicle side or any other direction.

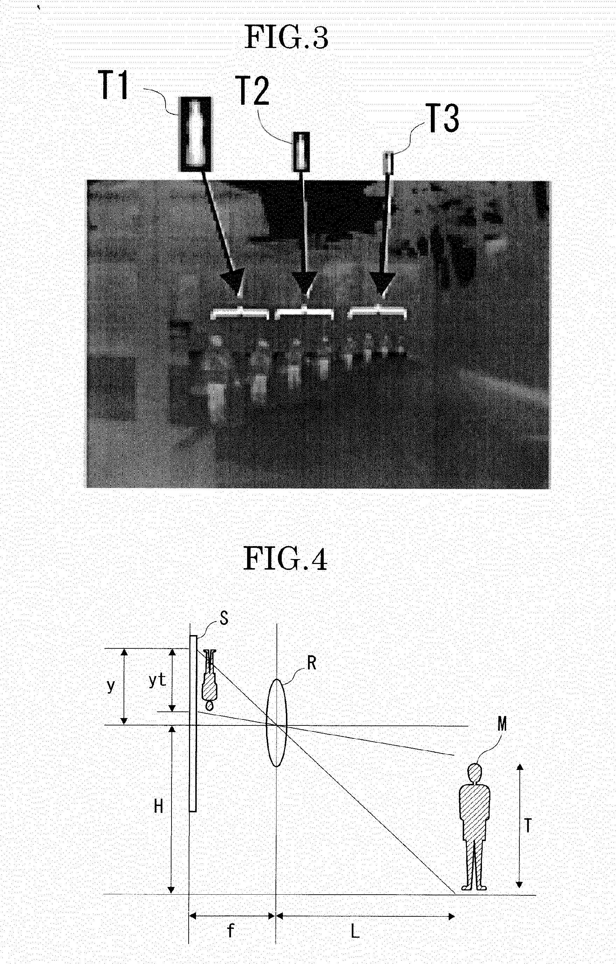

Although described later in detail, the pedestrian detection device 20 detects an image indicating a pedestrian M (see FIG. 4) in an infrared image obtained by the infrared camera 10.

The pedestrian position display unit 30 performs processing of displaying the position of the pedestrian image detected by the pedestrian detection device 20 by attaching a marker such as a rectangular frame thereto.

The image display unit 40 displays the image captured by the infrared camera 10, and displays, when the pedestrian detection device 20 detects the pedestrian M, a portion where the image thereof is displayed by attaching the marker thereto that is given by the pedestrian position display unit 30.

A detailed description is given below of a configuration of the pedestrian detection device 20 to detect the pedestrian.

In the first embodiment, so-called "pattern matching" is used as a method for detecting the pedestrian M from the image. In the pattern matching, templates T1 to T3 (see FIG. 3) of the pedestrian M are prepared in advance, and a similarity (correlation value) between the respective templates T1 to T3 and an area where the pedestrian M may exist within the image is obtained. When the similarity is high, the pedestrian M is determined to exist in the area.

Moreover, comparison of image elements is broadly categorized into two types: "comparison of brightness pixel values" and "comparison of object edge information".

The "comparison of object edge information" does not depend on the brightness of the entire image, and is thus suitable for use of devices outdoors, such as for a vehicle dependent on the weather or solar position. Since the edge information can be expressed with two values or with fewer gradations, the amount of data to be handled is small, resulting in less calculation of the similarity with the templates, which accounts for a substantial fraction of the detection processing. Accordingly, the "comparison of object edge information" is used in the first embodiment.

FIG. 2 is a block diagram showing the configuration of the pedestrian detection device 20. The pedestrian detection device 20 includes a brightness adjustment unit 21, an edge detection unit 22, a pedestrian template unit 23, a correlation value detection unit 24, a correlation region maximum value detection unit (high correlation region detection unit) 25, and a selection unit 26.

The brightness adjustment unit 21 clarifies the brightness difference (contrast) on the screen by adjusting the brightness of the image on the entire screen. The edge detection unit 22 detects the edge of the image having the contrast enhanced by the brightness adjustment unit 21.

The pedestrian template unit 23 includes preset different kinds of templates T1 to T3 for outlines of the pedestrian M. In this first embodiment, three kinds of templates, i.e., a first template T1, a second template T2 and a third template T3 are provided as shown in FIG. 3 in accordance with the difference in distance between the own vehicle and the pedestrian. Note that the first template T1 is used to detect the pedestrian M closest to the own vehicle in the image P captured by the infrared camera 10. The second template T2 is used to detect the pedestrian M present farther than that for the first template. The third template T3 is used to detect the pedestrian M present much farther than that for the second template. Thus, the templates T1 to T3 are set to have dimensions such that the template for detecting the pedestrian M farther from the vehicle is smaller.

The correlation value detection unit 24 obtains correlation values indicating how much portions extracted from an image portion are similar to the respective templates T1 to T3 (similarity) and then creates a correlation map representing correlation values of respective image positions. Specifically, the correlation values are obtained by performing comparison operations between pixel values of the respective templates T1 to T3 pre-stored in the pedestrian template unit 23 and the portions extracted so as to have the same sizes as the respective templates T1 to T3 from the image portion where the pedestrian M may exist in the edge image obtained by the edge detection unit 22 or the portions set to have the same size by enlargement or reduction after being extracted in the same size as the assumed pedestrian M.

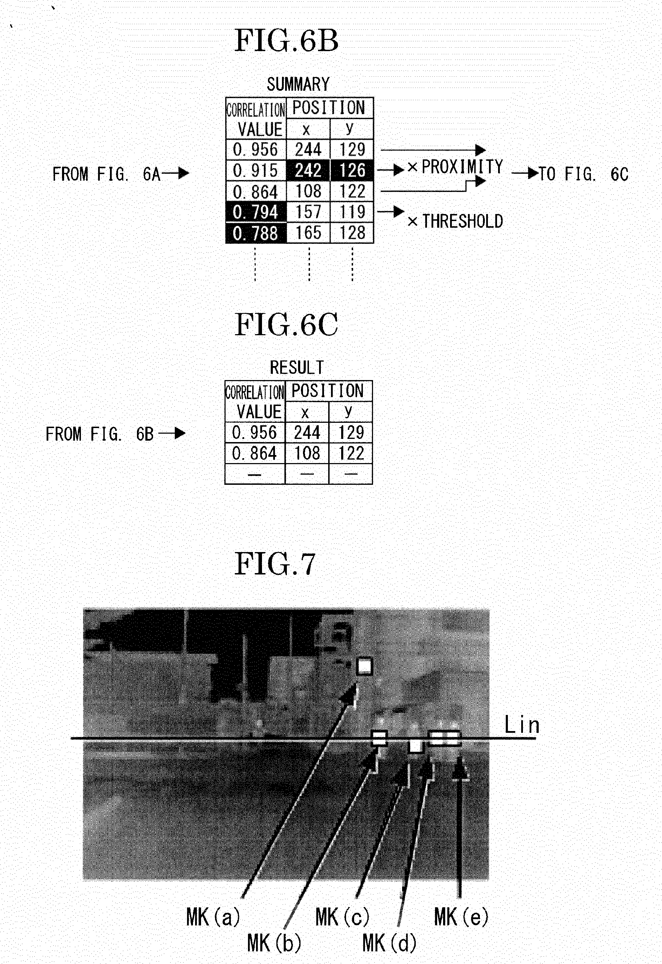

The correlation region maximum value detection unit 25 obtains peak positions of the correlation values since the correlation values in the correlation map have continuity. Then, when the peak values are equal to or higher than the preset difference threshold TH, the correlation region maximum value detection unit 25 determines that the values indicate pedestrian candidates MK (see, e.g., FIG. 7) and hands over them to the selection unit 26.

The selection unit 26 executes selection processing to exclude the pedestrian candidate likely to be other than the pedestrian M from the multiple pedestrian candidates MK, and then hands over the remaining pedestrian candidates MK to the pedestrian position display unit 30. Note that, in the selection processing, although described later in detail, it is determined whether to leave or exclude the pedestrian candidate, based on a y value indicating the height of a lower end (feet) of the pedestrian M and an average value Y thereof.

(Explanation of Operation by Correlation Value Detection Unit 24)

Next, further description is given of an operation to obtain correlation values by the correlation value detection unit 24. While various methods are used for the operation to obtain the correlation values, the following Formula (1) represents a SAD (Sum of Absolute Difference) as an example in the first embodiment.

$$SAD = \Sigma \,|\, \mathrm{Ser}\,(i, j)\text{-}\mathrm{Temp}\,(i, j)\,| \qquad \dots (1)$$

Here, Temp (i, j) denotes a pixel value of a position (i, j) of a template image, and Ser (i, j) denotes a pixel value of a position (i, j) in the image obtained by cutting out the periphery of the image position to obtain a correlation value of the examined image along the outline of the template.

A difference absolute value between the two values described above is obtained, and then the value of the entire size of each of the templates T1 to T3 (assuming that the size of each template is I pixels in height and J pixels in width, i= 1 to I and j= 1 to J) is added thereto to obtain a correlation value. In fact, the values are often manipulated so as to be easily handled based on the calculation result. For example, the higher the degree of coincidence between images, the smaller the correlation value in the above Formula (1). At the same time, the SAD can also be used for comparison between correlation values having different template sizes by dividing the SAD by the product of the number of pixels (the product of I and J) and the maximum pixel value D (256 for an 8-bit image and 1 for a binary image) (so-called normalization) and then subtracting the value thus obtained from 1 as shown in the following Formula (2).

$$SADn = 1\text{-}(SAD/(I \times J \times D)) \qquad \dots (2)$$

The above operation is executed for the entire examined region of the image captured by the infrared camera 10, thus creating a correlation map.

Here, further description is given of the relationship among the respective templates T1 to T3, the size of the pedestrian M as appears on the image, and the distance from the pedestrian M.

The first embodiment uses the fact that there is a correlation among the "distance" between the pedestrian and the infrared camera 10, the "size" as appears on the screen, and the "height position" as appears on the screen. This correlation is described with reference to FIG. 4.

In FIG. 4, M denotes a pedestrian, R denotes a lens of the infrared camera 10, and S denotes an imaging element (screen) of the infrared camera 10. Moreover, T denotes the height (body height) of the pedestrian M, L denotes a distance of the pedestrian M from the infrared camera 10, f denotes a focal length of the lens R, H denotes a mounting height of the infrared camera 10, y denotes a position where an image of the lower end (feet) of the pedestrian M is formed on the imaging element (screen) S, i.e., a distance from the center of the imaging element (screen) S, and yt denotes the dimension of the pedestrian M of the height T as the pedestrian M appears on the imaging element (screen) S. The image location on the imaging element (screen) S corresponds to the position of the camera image. However, the positional relationship of top and bottom on the imaging element (screen) S is inverted on the camera image.

From the relationships thereamong, the lower end (feet) position (y value) of the pedestrian M can be obtained by the following Formula (3), and the dimension yt of the pedestrian M as appears on the imaging element S can be obtained by the following Formula (4). In these formulae, the focal length f and the mounting height H are fixed values. Assuming that the height (body height) T of the pedestrian M is also a fixed value for convenience, it can be understood that there is a correlation (inverse relationship) among the "distance (L)", the "size (corresponding to yt)" as appears on the image and the "height position (y)" as appears on the screen.

$$y = f \times H/L \qquad \dots (3)$$

$$yt = y\text{-}\{f \times (H\text{-}T)\}/L \qquad \dots (4)$$

In the first embodiment, false detections are reduced by taking into consideration the tendency of the multiple candidates obtained by the pedestrian detection processing using those described above, and by excluding the candidates obtained by the pedestrian detection processing, which significantly deviate from the relationships described above.

Here, further description is given of the correlation value detection unit 24 using the first to third templates T1 to T3 of three different sizes in the first embodiment.

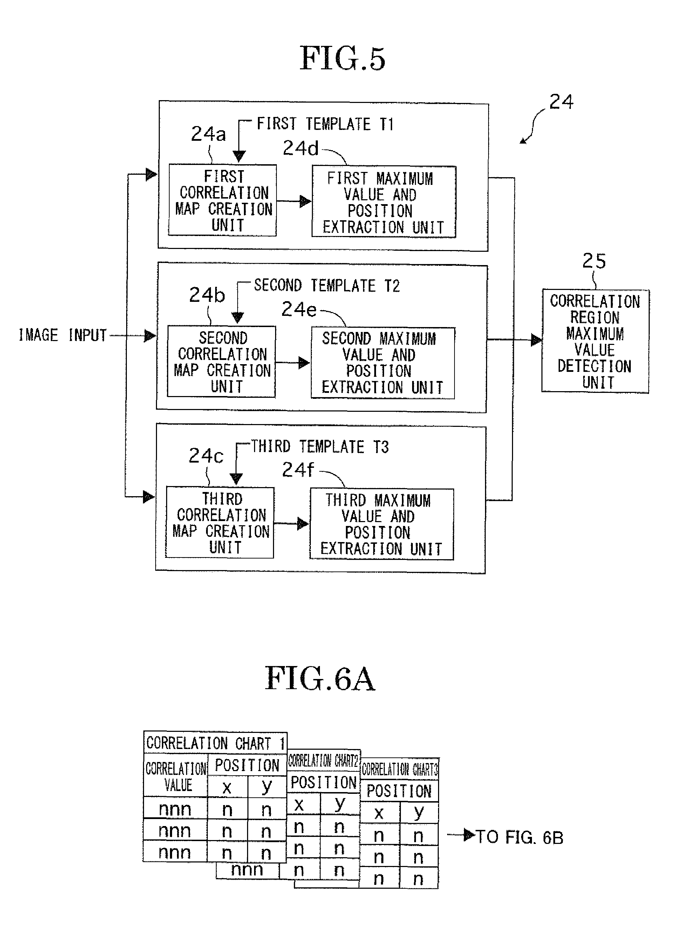

As shown in FIG. 5, the correlation value detection unit 24 includes first to third correlation map creation units 24a to 24c and first to third maximum value and position extraction units 24d to 24f.

When each image is inputted from the edge detection unit 22, a correlation map corresponding to each of the templates T1 to T3 is created by each of the first to third correlation map creation units 24a to 24c.

The first to third maximum value and position extraction units 24d to 24f create a list including, as data, a number of correlation values specified by the top of the maximum values and positions (x, y) thereof on the screen (hereinafter referred to as correlation value list data).

In this event, when the positions on the screen are adjacent to each other, redundant listing needs to be avoided for the same object (pedestrian) by taking into consideration the size of each of the templates T1 to T3. Therefore, the range of pedestrian candidates MK is narrowed down by taking into consideration the positions and correlation values.

Specifically, the first to third maximum value and position extraction units 24d to 24f make lists of candidates shown in FIG. 6A from the correlation value maps created by the first to third correlation map creation units 24a to 24c. Then, the first to third maximum value and position extraction units 24d to 24f further bring these lists of candidates into one list, in which the candidates are arranged in descending order of the correlation values, as shown in FIG. 6B. In this list, the candidates whose positions (x, y) are close to each other (overlapping candidates) and data having the correlation values not more than the preset threshold value (the threshold value= 0.8 in the first embodiment) are deleted to determine final pedestrian candidates MK shown in FIG. 6C.

(Explanation of Selection Processing)

Furthermore, in the pedestrian detection device 20, the selection unit 26 performs selection processing to achieve false detection reduction that is the object of the present invention. In the selection processing, the candidates likely to be the pedestrian M are left and those likely to be other than the pedestrian M are excluded from the pedestrian candidates MK.

The selection processing is described in detail below.

The pedestrian candidates MK listed using the common template out of the first to third templates T1 to T3 described above should be at about the same distance, and thus should be lined up on a horizontal straight line in the same image.

FIG. 7 shows positions of the pedestrian candidates MK (a) to (e) with squares in the image for the purposes of illustration, the pedestrian candidates MK being listed in the correlation map of any one of the first to third templates T1 to T3, e.g., the second template T2. As shown in FIG. 7, the four pedestrian candidates MK (b) to (e) are lined up on the line Lin.

Meanwhile, the pedestrian candidate MK (a) disposed at the leftmost position in FIG. 7 significantly deviates from the line Lin. That is, the pedestrian candidate MK (a) significantly deviating from the other pedestrian candidates MK (b) to (e) is actually a part of a building, and the pedestrian M correlated with the second template T2 is disposed at the position different from where the pedestrian is supposed to be. Accordingly, the selection unit 26 excludes the pedestrian candidate MK (a), from the candidates, which has a high correlation value with the predetermined template but is disposed at the position deviating from the other pedestrian candidates MK (b) to (e).

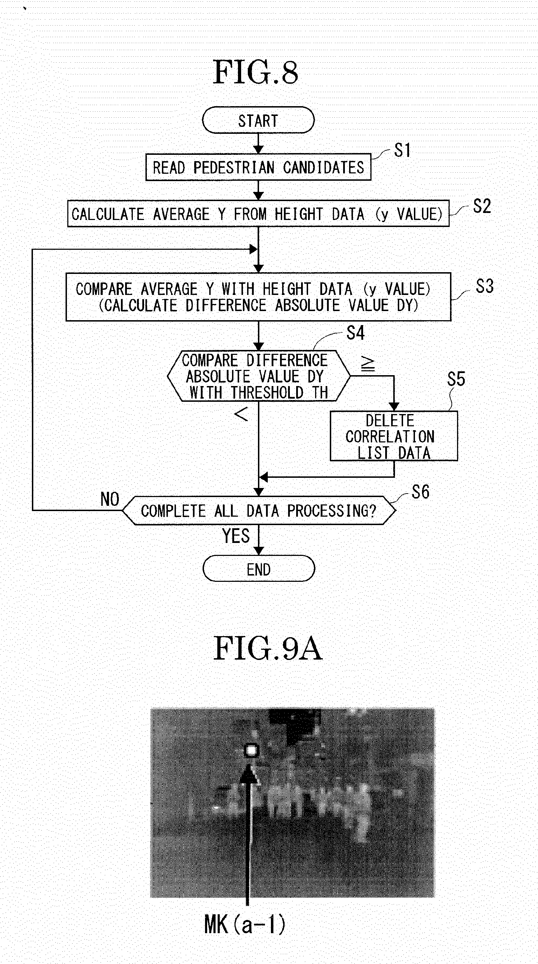

Next, the flow of the selection processing by the selection unit 26 is described with reference to a flowchart shown in FIG. 8. Note that the selection processing shown in FIG. 8 is performed independently for each of groups of the pedestrian candidates MK having high correlation values with the first to third templates T1 to T3, respectively. Moreover, with the flowchart, the description is given along the processing flow when the pedestrian candidates MK (a) to (e) shown in FIG. 7 are detected using the third template T3.

First, in Step S1, on-screen height data (y values) of all the correlation lists are retrieved for the pedestrian candidates MK (a) to (e) selected by the correlation region maximum value detection unit 25. Then, the processing proceeds to Step S2.

An average value Y of all the height data (y values) retrieved is obtained in Step S2, and then the processing proceeds to Step S3. The average value Y corresponds to the position of the line Lin shown in FIG. 7.

The processing from Step S3 to Step S6 is individually and sequentially performed for each of the pedestrian candidates MK (a) to (e). First, in Step S3, the correlation list data sets (sets of correlation values, y values and x values) of the respective pedestrian candidates MK (a) to (e) are read, and then a difference absolute value DY is calculated, which indicates a difference between the height data (y value) in each correlation list data set and the average value Y calculated in Step S2. Thereafter, the processing proceeds to Step S4.

In Step S4, it is determined whether the difference absolute value DY is larger or smaller than the preset difference threshold TH. Then, if the difference absolute value DY is less than the difference threshold TH, the processing proceeds to Step S6. On the other hand, if the difference absolute value DY is not less than the difference threshold TH, the processing proceeds to Step S5. Note that the difference threshold TH is set for each of the groups corresponding to the respective templates T1 to T3, and the difference threshold TH corresponding to the third template T3 is set to be smaller than the difference threshold TH corresponding to the first template T1.

After the pedestrian candidate MK (MK (a) in the example shown in FIG. 7) is excluded in Step S5, the processing proceeds to Step S6. In Step S6, it is determined whether or not the processing from Step S3 is completed for all the pedestrian candidates MK (a) to (e). If the processing is not completed, the processing returns to Step S3. On the other hand, if the processing is completed, the selection processing is terminated. For example, when the processing is performed for the pedestrian candidates sequentially from MK (a) to MK (e), the processing from Step S3 is performed for the pedestrian candidate MK (b) if the processing is completed for the pedestrian candidate MK (a), and then the processing is performed for the pedestrian candidate MK (c) after the processing from Step S3 is completed for the pedestrian candidate MK (b). Thereafter, the selection processing is terminated after the processing for the pedestrian candidate MK (e) is completed. Here, the word "all" in all the pedestrian candidates MK means "all" of the pedestrian candidates MK having high correlation values with any one of the first to third templates T1 to T3. The above processing is performed for each of the templates T1 to T3.

(Operations of First Embodiment)

Next, description is given of operations of the pedestrian detection system 100 according to the first embodiment. In driving at night, images in front of the vehicle are captured by the infrared camera 10. An example of images obtained in this event is the image shown in FIG. 7.

The image captured by the infrared camera 10 is inputted to the pedestrian detection device 20. In the pedestrian detection device 20, correlation values with the first to third pedestrian templates T1 to T3 are obtained, respectively, by the correlation value detection unit 24 for the image subjected to brightness adjustment by the brightness adjustment unit 21 and edge detection by the edge detection unit 22.

Furthermore, in the correlation region maximum value detection unit 25, the data sets having correlation values higher than the preset threshold value (0.8 in the first embodiment) and having the x value and y value which are not close to each other are listed as the pedestrian candidates MK (a) to (e).

Note that, in the example shown in FIG. 7, the pedestrian candidates MK (a) to (e) having high correlation values with the third template T3 are listed. As for the other templates T1 and T2, the pedestrian candidates MK are similarly listed to form groups of the pedestrian candidates MK for each corresponding template.

Next, the selection unit 26 performs the following processing for each of the groups of the pedestrian candidates listed.

First, an average value Y of the height data (y values) of the pedestrian candidates MK (a) to (e) in the pedestrian candidate groups is obtained. Then, a difference absolute value DY is obtained by comparing the obtained average value Y with the height data (y values) of the respective pedestrian candidates MK (a) to (e). Thereafter, the pedestrian candidates MK (b) to (e) having the difference absolute value DY less than the difference threshold TH are left, while the pedestrian candidate MK (a) having the difference absolute value DY not less than the difference threshold TH is excluded.

Through the selection processing by the selection unit 26, the pedestrian candidate MK (a), among the pedestrian candidates MK (a) to (e) shown in FIG. 7, which significantly deviates from the line Lin is excluded. Similar processing is sequentially executed for the other pedestrian groups.

Subsequently, the pedestrian position display unit 30 performs processing of displaying the remaining pedestrian candidates MK (b) to (e) by putting markers on images indicating the respective pedestrian candidates MK (b) to (e) in the image display unit 40.

(Effects of First Embodiment)

The pedestrian detection system 100 according to the first embodiment described above can achieve the effects listed below.

a) When there are multiple pedestrian candidates MK (a) to (e), the candidate (MK (a)) disposed at the position different from those of the other pedestrian candidates (MK (b) to (e)), even if the candidate has a high correlation value with each of the templates T1 to T3, is determined to be other than the pedestrian M and excluded from the candidates by the selection unit 26. Thus, the pedestrian candidate MK based on the image of a non-pedestrian is excluded, and thus detection accuracy for the pedestrian M can be improved.

b) In the selection processing, the selection is performed by comparing the preset difference threshold TH with the difference absolute value DY that is the difference between the height data (y value) of the respective pedestrian candidates MK (a) to (e) and the average value Y Thus, compared with one using processing of specifying and correcting errors from so-called calibration processing and the like, the system can be implemented without further increasing the system throughput, and can also be implemented without further increasing the accuracy of the mounting location of the infrared camera 10. Therefore, the first embodiment can realize the improved detection rate of the pedestrian M as described in the above effect a) without further increasing the system throughput or adding process restrictions (i.e., improving the mounting accuracy).

<Second Embodiment>

In the first embodiment described above, the selection processing is performed for each of the pedestrian candidate groups having high correlation values with the respective templates T1 to T3. Meanwhile, in a second embodiment, description is given of an example where selection processing is performed after integration of correlation value data on the respective templates T1 to T3.

The main concern in the processing of the first embodiment is the case where only the pedestrian candidate M based on the non-pedestrian is detected by matching of any of the first to third templates T1 to T3.

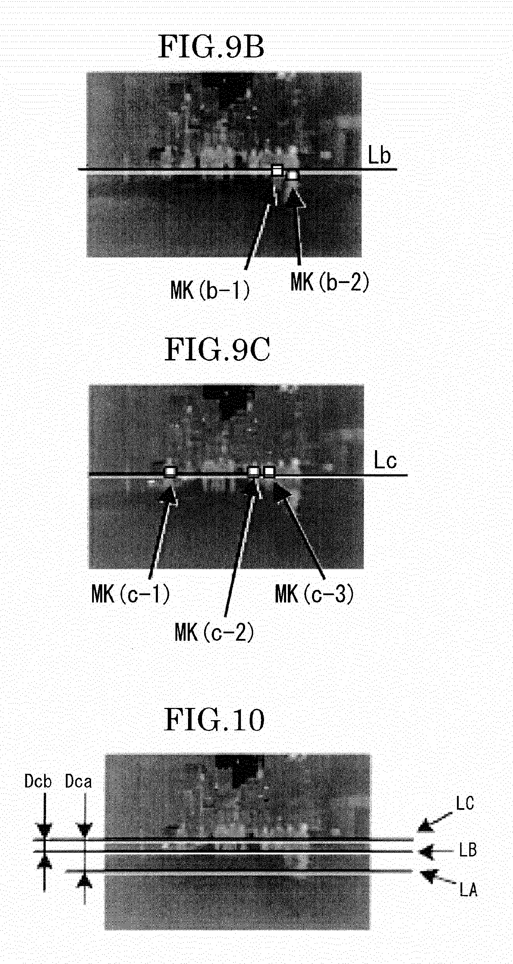

FIGs. 9A to 9C show concrete examples when only one or more pedestrian candidates MK are detected. FIG. 9A shows a pedestrian candidate MK (a-1) obtained based on a correlation value with the first template T1. FIG. 9B shows pedestrian candidates MK (b-1) and (b-2) obtained based on correlation values with the second template T2. FIG. 9C shows pedestrian candidates MK (c-1) to (c-3) obtained based on correlation values with the third template T3.

In the examples, an image of a non-pedestrian (signboard) is detected as the pedestrian candidate MK shown in FIG. 9A. FIG. 9A shows the case where the pedestrian candidate MK having a high correlation value with the first template T1 is only the pedestrian candidate MK (a-1) based on the non-pedestrian. In such a case, when the average value Y is obtained from the pedestrian candidate MK having a high correlation value for each of the templates as in the case of the first embodiment, the difference absolute value DY of the above pedestrian candidate MK (a-1) does not reach (i.e., is less than) the difference threshold TH. Thus, the pedestrian candidate MK (a-1) is not excluded.

To counter the situation, in the pedestrian detection system according to the second embodiment, the selection processing is performed by obtaining an overall reference line (overall reference height) LZ within the screen from an average value of listed data on the respective templates T1 to T3, and then setting group reference lines LA, LB and LC for each of the groups having high correlation values with the templates T1 to T3.

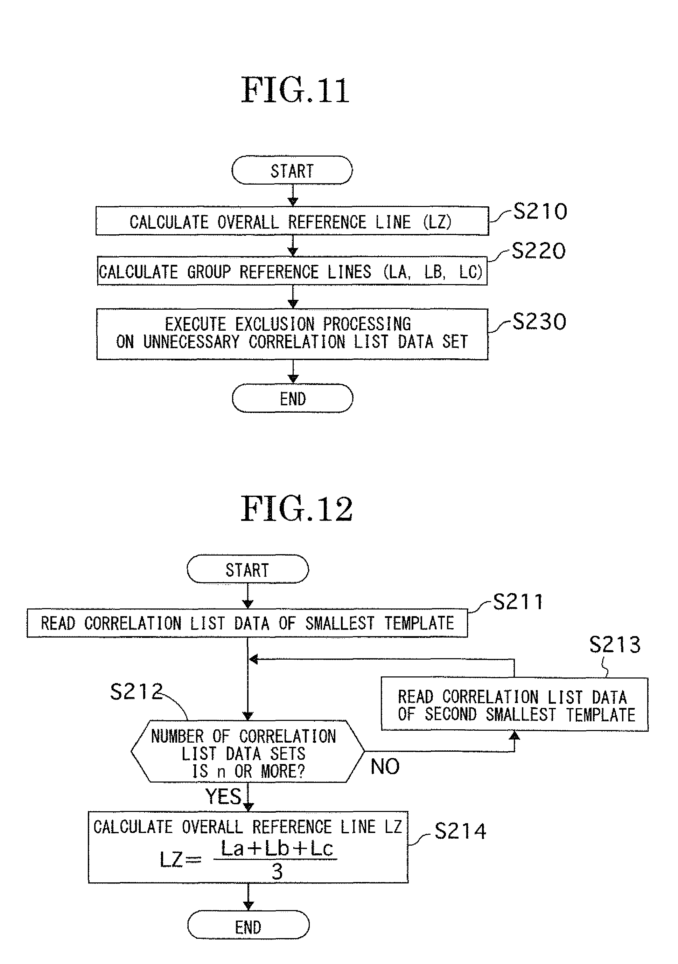

The flow of the selection processing according to the second embodiment is described below with reference to flowcharts shown in FIGs. 11 to 13.

FIG. 11 shows the overall flow of the selection processing. First, overall reference line calculation processing is performed to obtain an overall reference line LZ on the entire screen in Step S210, and then the processing proceeds to Step S220.

In Step S220, a first group reference line LA, a second group reference line LB and a third group reference line LC are obtained based on the overall reference line LZ. Then, the processing proceeds to Step S230. Note that, although described in detail later, the overall reference line LZ coincides with any one of the group reference lines LA to LC. Moreover, as shown in FIG. 10, difference set values Dca and Dcb between the respective group reference lines LA to LC are preset. Therefore, the respective group reference lines LA to LC can be obtained by adding or subtracting the difference set values Dca and Dcb to or from the overall reference line (average value Y) LZ. Accordingly, the group reference lines LA to LC represent group average values Ya to Yc, respectively.

The difference set value Dca described above is a difference between the first group reference line LA and the third group reference line LC, while the difference set value Dcb is a difference between the second group reference line LB and the third group reference line LC.

In Step S230, exclusion processing is executed to exclude unnecessary correlation list data (pedestrian candidates MK) from among those extracted based on the templates T1 to T3. Note that the exclusion processing is described later in detail.

Next, the overall reference line calculation processing in Step S210 is described in detail with reference to the flowchart shown in FIG. 12.

First, after a correlation list data set correlated with the third template T3 that is the smallest template is retrieved in Step S211, the processing proceeds to Step S212. Note that when the number of the templates is larger than "3" in the case of the second embodiment, correlation list data correlated with the smallest template is retrieved.

In Step S212, it is determined whether or not the number of the correlation list data sets is not less than the preset number n. If the number of the correlation list data sets is less than n, the processing proceeds to Step S213. On the other hand, if the number of the correlation list data sets is not less than n, the processing proceeds to Step S214. Note that n is 2 or more, and the description is given of the case where n= 2 in the second embodiment.

After correlation list data sets of the second smallest template are retrieved in Step S213, the processing returns to Step S212. For example, when the number of the correlation list data sets of the third template T3 is less than n in Step S212, correlation list data sets of the second template T2 are retrieved. When the number of the correlation list data sets of the second template T2 is less than n, the correlation list data sets of the first template T1 are retrieved. Specifically, if the number of the correlation list data sets is small, the reference line obtained using the correlation list data sets has a high probability of including an error. Therefore, when the number of the sets is less than n, the use of the correlation list data sets is avoided, and the correlation list data sets of the second smallest template are read.

In Step S214, the average value Y is obtained based on the height data (y value) in the read correlation list data set, and then the average value Y is set to be the overall reference line LZ.

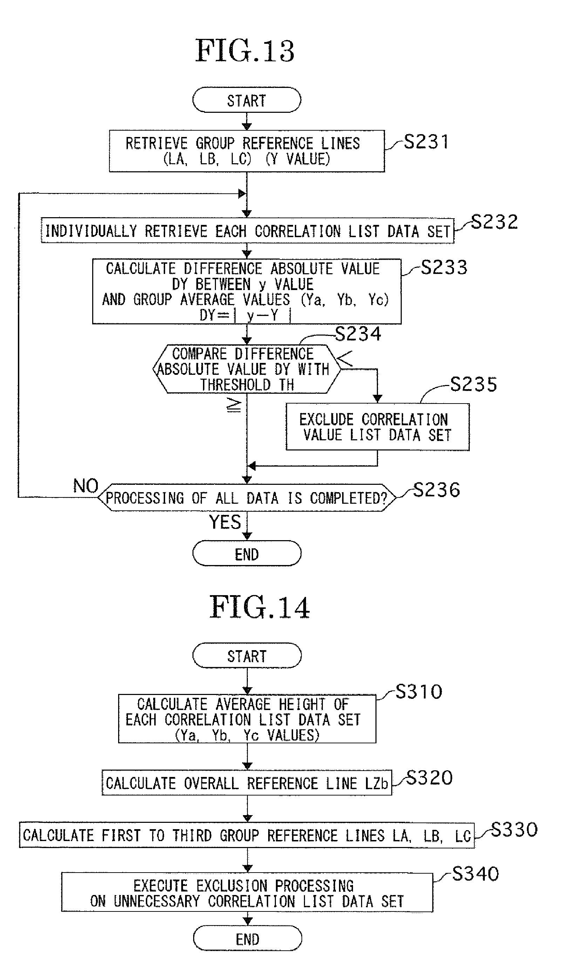

Next, the exclusion processing in Step S230 is described in detail with reference to the flowchart shown in FIG. 13. Note that the exclusion processing is performed for each of the groups of the pedestrian candidates correlated with the respective templates T1 to T3.

First, the group reference lines LA to LC are read in Step S231, and then the processing proceeds to Step S232.

In Step S232, correlation list data sets correlated with the templates T1 to T3 are individually retrieved. Then, the processing proceeds to Step S233.

In Step S233, a difference absolute value DY with a corresponding line (the group average value Ya, Yb or Yc) among the group reference lines LA to LC corresponding to the height data (y value) in the correlation value list data set is calculated for each of the groups correlated with the templates T1 to T3. Then, the processing proceeds to Step S234.

In Step S234, the difference absolute value DY of each correlation value list data set is compared with the same difference threshold TH as that in the first embodiment. If the difference absolute value DY exceeds the difference threshold TH, the processing proceeds to Step S235, and further proceeds to Step S236 after exclusion of the correlation value list data set. If the difference absolute value DY is not more than the difference threshold TH, the processing proceeds directly to Step S236. Note that, as the difference threshold TH, different values are set for corresponding groups as in the case of the first embodiment.

In Step S236, it is determined whether or not the processing of Step S232 and subsequent steps is executed for all the correlation value list data sets. If there are unprocessed data sets, the processing returns to Step S232. On the other hand, if the processing is completed, the exclusion processing is terminated.

(Operations of First Embodiment)

Next, description is given of operations of the second embodiment.

The second embodiment is the same as the first embodiment in that correlation values with the first to third templates T1 to T3 are obtained by the correlation value detection unit 24, the correlation value list data having correlation values exceeding the correlation threshold and whose positions are not close to each other are extracted by the correlation region maximum value detection unit 25, and the extracted list data are inputted as the pedestrian candidates MK to the selection unit 26.

FIGs. 9A to 9C show examples of the image and pedestrian candidates MK. FIG. 9A shows one pedestrian candidate MK (a-1) highly correlated with the first template T1. FIG. 9B shows two pedestrian candidates MK (b-1) and (b-2) highly correlated with the second template T2. FIG. 9C shows three pedestrian candidates MK (c-1) to (c-3) highly correlated with the third template T3. Note that the pedestrian candidate MK (a-1) correlated with the first template T1 shown in FIG. 9A is detected from a non-pedestrian image, and is disposed at a position distant from those of the other pedestrian candidates MK.

Next, description is given below of selection processing by the selection unit 26 when the pedestrian candidates MK shown in FIGs. 9A to 9C are listed as described above.

When the pedestrian candidates MK as described above are detected, the number of the correlation list data of the smallest third template T3 is n or more (n= 2). Thus, the overall reference line LZ is calculated from the average value Y of the height data (y values) of the pedestrian candidates MK (c-1) to (c-3) (Step S212 to S213). In this case, the overall reference line LZ is set to be the same as the third group reference line LC.

After the overall reference line LZ is set based on the third group reference line LC, the second group reference line LB is set by subtracting the difference set value Dcb for the second template from the overall reference line LZ (= LC), and the first group reference line LA is set by subtracting the difference set value Dca for the first template from the overall reference line LZ (LC) (Step S220).

The pedestrian candidates MK and the reference lines LA to LC are compared for each of the groups of the pedestrian candidates MK correlated with the respective templates T1 to T3, and the candidates having large differences are excluded from the pedestrian candidates MK.

Therefore, in the examples shown in FIGs. 9A to 9C, the pedestrian candidate MK (a-1) highly correlated with the first template T1 shown in FIG. 9A is excluded since the candidate has a large difference from the first group reference line LA. Moreover, the pedestrian candidates MK (b-1) and (b-2) shown in FIG. 9B are not excluded but left since the candidates have small differences from the second group reference line LB. Similarly, the pedestrian candidates MK (c-1) to (c-3) shown in FIG. 9C are not excluded but left since the candidates have small differences from the third group reference line LC.

As in the case of the first embodiment, the pedestrian candidates MK thus left are displayed with markers by the image display unit 40.

(Effects of Second Embodiment)

The second embodiment can also achieve the effects a) and b) described above in the first embodiment from the same reasons as those in the first embodiment. In addition to the effects described above, the second embodiment can achieve the effects listed below.

c) The overall reference line LZ is set based on the correlation value list data set including multiple pedestrian candidates MK for one of the templates T1 to T3 among the pedestrian candidates MK obtained based on the correlation with the templates. Moreover, the group reference lines LA to LC are set based on the overall reference line LZ.

Therefore, the group reference line correlated with the template having only one pedestrian candidate MK can also be set without the only one pedestrian candidate MK. Furthermore, occurrence of false detection can be prevented even if the pedestrian candidate MK is the image based on a non-pedestrian.

To be more specific, the pedestrian candidate MK (a-1) highly correlated with the first template T1 shown in FIG. 9A is detected from the non-pedestrian image. However, the first group reference line LA for the group correlated with the first template T1 is set without being based on the correlation value list data set of the pedestrian candidate MK but based on the overall reference line LZ set based on the three pedestrian candidates MK (c-1) to (c-3) shown in FIG. 9C.

Thus, the pedestrian candidate MK (a-1) based on the non-pedestrian image shown in FIG. 9A is likely not to be excluded because of a small difference when the first group reference line LA is set based on the y value thereof. However, when the first group reference line LA is set based on the overall reference line LZ as in the second embodiment, the candidate is excluded because of the increased difference. As described above, in the second embodiment, false detection based on the non-pedestrian image is avoided, and thus the pedestrian detection accuracy can be further improved.

d) In setting the overall reference line LZ from the multiple pedestrian candidates MK as described in the above c) it is determined whether or not there are multiple pedestrian candidates MK from the pedestrian candidate MK having less variation in the maximum correlation value and highly correlated with the small template. Then, the overall reference line LZ is obtained from the correlation value list data set correlated with the smallest template in which the multiple pedestrian candidates MK exist. Accordingly, compared with the one obtaining the overall reference line LZ from the correlation value list data correlated with the large template, variations in the overall reference line LZ are reduced and the false detection prevention function can be improved.

<Third Embodiment>

Next, a pedestrian detection system according to a third embodiment is described. The pedestrian detection system according to the third embodiment is a modified example of the second embodiment. The third embodiment is different from the second embodiment in the way of setting the reference line. In the third embodiment, an overall reference line LZb is set based on reference lines LA, LB and LC.

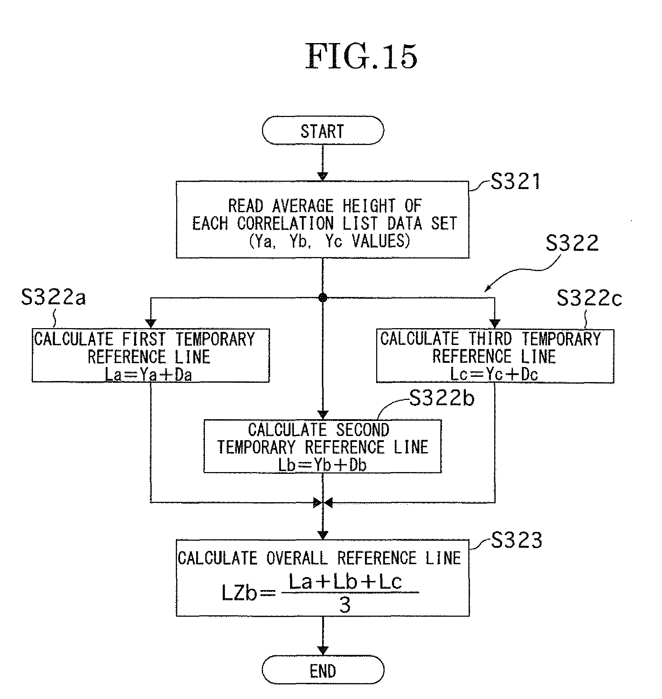

The flow of selection processing by a selection unit 26 according to the third embodiment is described below with reference to flowcharts shown in FIGS. 14 and 15.

(Flow of Selection Processing)

The overall flow of the selection processing is first described with reference to the flowchart shown in FIG. 14. In Step S310, a first average height Ya that is an average value of height data (y value) of correlation list data correlated with the first template T1, a second average height Yb that is an average value of height data (y value) of correlation list data correlated with the second template T2, and a third average height Yc that is an average value of height data (y value) of correlation list data correlated with the third template T3 are calculated by reading the height data (y value) of correlation list data sets correlated with the first to third templates T1 to T3, respectively, from the correlation region maximum value detection unit 25. Then, the processing proceeds to Step S320.

After the overall reference line LZb is calculated from the average heights Ya to Yc in Step S320, the processing proceeds to Step S330. Note that the method for calculating the overall reference line LZb is described later in detail.

The first to third group reference lines LA to LC are calculated based on the overall reference line LZb in Step S330, and then the processing proceeds to Step S340. Note that, in the third embodiment, the calculation of the respective group reference lines LA to LC is performed as follows. In the third embodiment, difference values Daz, Dbz and Dcz of the group reference lines LA, LB and LC are set for the overall reference line LZb, as in the case of the second embodiment. The respective reference lines LA, LB and LC are calculated by subtracting the difference values Daz, Dbz and Dcz from the overall reference line LZb, respectively.

Next, with reference to FIG. 15, description is given of the flow of the processing of calculating the overall reference line LZb in Step S320.

First, in Step S321, the first to third average heights Ya to Yc calculated in Step S310 are read. Then, the processing proceeds to Step S322.

After first to third temporary reference lines La to Lc correlated with the respective templates T1 to T3 are obtained based on the average heights Ya to Yc in Step S322, the processing proceeds to Step S323. Note that since the processing is performed in parallel for the temporary reference lines La to Lc in Step S322, processing steps are represented in parallel. Specifically, in Step S322a, the first temporary reference line La is obtained by adding the preset difference set value Da to the first average height Ya. In Step S322b, the second temporary reference line Lb is obtained by adding the preset difference set value Db to the second average height Yb. In Step S322c, the third temporary reference line Lc is obtained by adding the preset difference set value Dc to the third average height Yc.

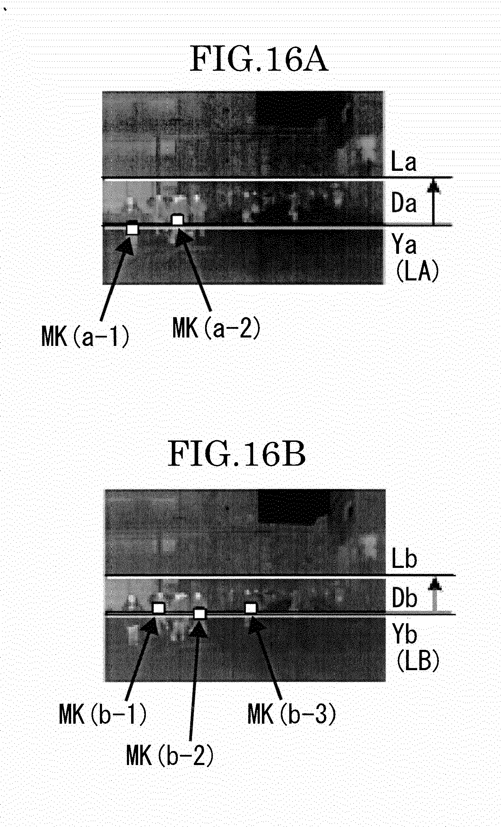

FIGs. 16A to 16C show relationships between the first to third average heights Ya to Yc and the temporary reference lines La to Lc. In the third embodiment, the difference set values Da to Dc are set to have a relationship of Da>Db>Dc. Moreover, the temporary reference lines La to Lc are set to have heights near the third group reference line LC described in the second embodiment.

In Step S323, an operation of obtaining an average value of the temporary reference lines La to Lc as the overall reference line LZb. Then, the entire processing is completed.

(Operations of Third Embodiment)

Next, operations of the third embodiment are described.

The third embodiment is also the same as the first embodiment in that correlation values with the first to third templates T1 to T3 are obtained by the correlation value detection unit 24, the correlation value list data having correlation values exceeding the correlation threshold and whose positions are not close to each other are extracted by the correlation region maximum value detection unit 25, and the extracted list data are inputted as the pedestrian candidates MK to the selection unit 26.

Here, description is given of the operations when the pedestrian candidate MK as shown in FIGs. 16A to 16C are obtained.

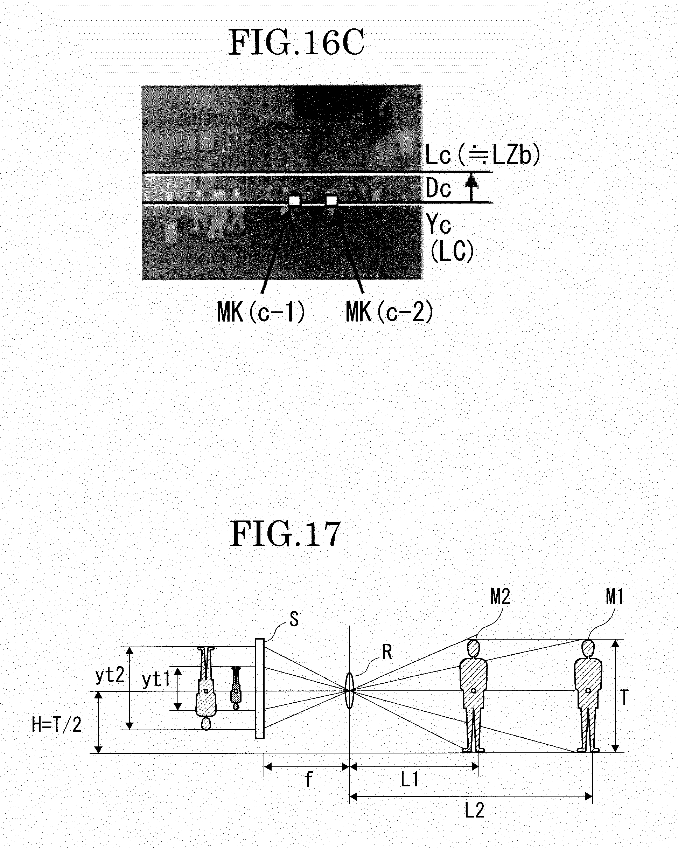

In the examples shown in FIGs. 16A to 16C, the correlation region maximum value detection unit 25 obtains pedestrian candidates MK (a-1) and (a-2) shown in FIG. 16A having a large correlation value with the first template T1, pedestrian candidates MK (b-1) to (b-3) shown in FIG. 16B having a large correlation value with the second template T2, and pedestrian candidates MK (c-1) and (c-2) shown in FIG. 16C having a large correlation value with the third template T3.

Thereafter, the selection unit 26 calculates a first group average value Ya based on the height data (y value) of the pedestrian candidates MK (a-1) and (a-2) shown in FIG. 16A, calculates a second group average value Yb based on the height data (y value) of the pedestrian candidates MK (b-1) to (b-3) shown in FIG. 16B, and calculates a third group average value Yc based on the height data (y value) of the pedestrian candidates MK (c-1) and (c-2) shown in FIG. 16C (Step S310).

Furthermore, the temporary reference lines La to Lc shown in FIGs. 16A to 16C, respectively, are calculated from the average value of the group average values Ya to Yc (Step S322). The difference set values Da to Dc are set so that the temporary reference lines La to Lc are basically set to have approximately the same height. However, the height may vary in the case of a variation in the position of the pedestrian M or false detection of a non-pedestrian.

To counter such a situation, the overall reference line LZb can be set at a position where such variation components are suppressed, by setting the average value of the temporary reference lines La to Lc to be the overall reference line LZb.

Thereafter, preset difference values are subtracted again from the overall reference line LZb, thus obtaining the first group reference line LA, the second group reference line LB and the third group reference line LC (Step S330).

The group reference lines LA to LC described above are set close to the group average values Ya to Yc shown in FIGs. 16A to 16C when the pedestrian candidates MK are based on the pedestrian M as shown in FIGs. 16A to 16C. On the other hand, when the pedestrian candidates highly correlated with the first template T1, for example, include the pedestrian candidate MK (a-1) based on a non-pedestrian as shown in FIG. 9A described in the second embodiment, the first group average value Ya is set at a position higher than that shown in FIG. 16A. However, even in such a case, the first group reference line LA is set from the overall reference line LZb obtained from the group average values Ya to Yc. Thus, the first group reference line LA is set at a position close to the first group average value Ya shown in FIG. 16A.

Therefore, the pedestrian candidate MK (a-1) based on the non-pedestrian shown in FIG. 9A, and the like are excluded since there is a gap between the candidates and the first group reference line LA.

(Effects of Third Embodiment)

As described above, the pedestrian detection system according to the third embodiment can achieve the effects a) and b) described above, as in the case of the first and second embodiments.

Moreover, in the third embodiment, the first to third group average values Ya to Yc are obtained based on the correlation list data set highly correlated with the templates T1 to T3, the temporary reference lines La to Lc are obtained from the group average values Ya to Yc, the overall reference line LZb is obtained therefrom, and the reference lines LA to LC are obtained from the overall reference line LZb.

Accordingly, even when any of the groups has no pedestrian candidate MK or has only one candidate, the respective group reference lines LA to LC can be set after setting of the overall reference line LZb. Thus, occurrence of false detection can be prevented even if any of the groups has only the pedestrian candidate MK based on the non-pedestrian.

<Fourth Embodiment>

Next, a pedestrian detection system according to a fourth embodiment of the present invention is described. The fourth embodiment is an example where the mounting height of the infrared camera 10 is set to be about half the height of the pedestrian M.

In this case, the center of the pedestrian obtained by the imaging element (screen) S is at an approximately constant height within the screen of the imaging element S. Note that $yt1$ and $yt2$ are dimensions of pedestrians M1 and M2 on the imaging element (screen) S.

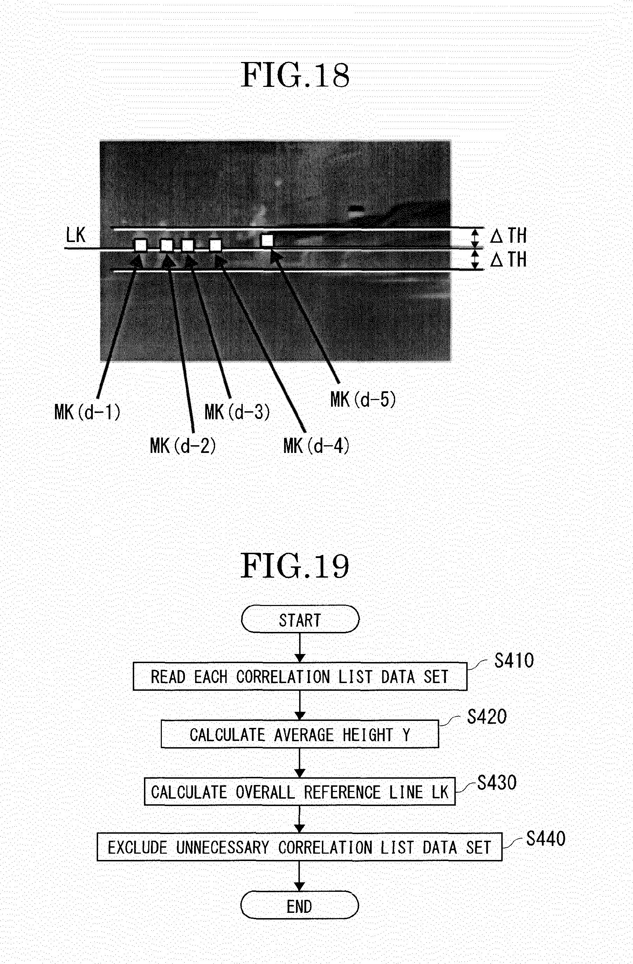

FIG. 18 shows an example of an image captured by the infrared camera 10 in the fourth embodiment. In the example, the center of the pedestrian candidate MK is disposed at an approximately constant height (height of LK).

The fourth embodiment is an example where an average height of pedestrian candidates MK (d-1) to (d-4) is obtained, and when there is a pedestrian candidate having a height distant from the average height, such a candidate is excluded as false recognition.

FIG. 19 is a flowchart showing the flow of selection processing in the fourth embodiment. First, in Step S410, correlation list data sets highly correlated with the templates T1 to T3 are read. Then, the processing proceeds to Step S420.

After an average value Y of height data (y value) of the correlation list data sets is calculated in Step S420, the processing proceeds to Step S430.

The overall reference line LK is calculated based on the average value Y in Step S430, and then the processing proceeds to Step S440.

In Step S440, unnecessary correlation list data sets (pedestrian candidates MK) are excluded. Thereafter, the processing is terminated. Note that the determination of whether to leave or exclude the pedestrian candidates MK in Step S440 is made based on a deviation from the overall reference line LK shown in FIG. 18. To be more specific, the pedestrian candidates are left if the deviation is less than a preset threshold value $\Delta$TH, and are excluded if the deviation is not less than the threshold value $\Delta$TH.

As described above, in the pedestrian detection system according to the fourth embodiment, since the infrared camera 10 is installed at around the height of the center of the pedestrian M, the height of the center of the pedestrian candidate MK highly correlated with the templates T1 to T3 is disposed at an approximately constant height regardless of the size of the templates T1 to T3 in the case of the image based on the pedestrian M.

Accordingly, the pedestrian candidate MK based on the image of the pedestrian M is likely to be disposed near the overall reference line LK obtained from the average value Y of the heights of the centers of the respective pedestrian candidates MK. On the other hand, the pedestrian candidate MK based on the image of the non-pedestrian is likely to be disposed distant from the overall reference line LK. Thus, false detection based on the image of the non-pedestrian can be suppressed by excluding the pedestrian candidates MK distant from the overall reference line LK by the threshold value $\Delta$TH or more.

Moreover, in the fourth embodiment, even if the pedestrian candidates MK highly correlated with the templates T1 to T3 are different, the center of the pedestrian is disposed at approximately the same height. Thus, the overall reference line LK can be set when there is more than one pedestrian candidate MK even if there is a template including only one or no pedestrian candidate MK. As a result, in addition to the effects a) and b) described above, occurrence of false detection can be suppressed even if one or two pedestrian candidates MK of the multiple templates T1 to T3 are only those based on the image of the non-pedestrian, as in the case of the effect c) in the second embodiment.

<Fifth Embodiment>

Next, a pedestrian detection system according to a fifth embodiment of the present invention is described. The fifth embodiment is a modified example of the fourth embodiment, showing an example where a child is recognized in addition to the pedestrian M.

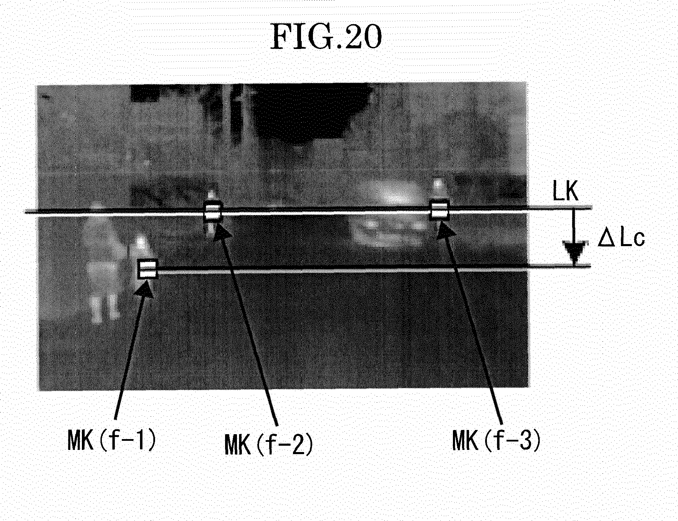

Specifically, in the fifth embodiment, when there is a pedestrian candidate MK near a position below an overall reference line LK set based on pedestrian candidates MK (f-1) to (f-3) by a preset value ΔLc as shown in FIG. 20, the pedestrian candidate is recognized as a child.

The above processing is executed between Step S430 and Step S440 in the fourth embodiment, for example.

Furthermore, in the fifth embodiment, the pedestrian candidate MK recognized as a child is displayed so as to be more noticeable than the other pedestrian candidate (adult) MK in the image display unit 40 based on the processing by the pedestrian position display unit 30. Note that, as the noticeable display, for example, "flashing" or "display in different colors (for example, yellow for adult and red for child)" is used.

In addition to the effects of the fourth embodiment, the fifth embodiment described above makes it possible to detect a child, to display a child in a different way from the other pedestrian M recognized as an adult, and thus to more strongly alert the driver.

Although the first to fifth embodiments of the present invention have been described in detail above with reference to the drawings, the specific configuration is not limited to those of the first to fifth embodiments but the present invention may include changes in design without departing from the gist of the present invention.

For example, in the first to fifth embodiments, a pedestrian is detected by the pedestrian detection device 20, and then the position of the pedestrian is displayed. However, the processing after the detection of the pedestrian is not limited to such display but other processing may be performed. Note that examples of the other processing include driving support processing such as turning and braking to avoid a collision between the vehicle and the detected pedestrian.

Moreover, while the example using the three kinds of templates has been described in the first to fifth embodiments, at least one template may be provided or at least two templates may be provided if there is more than one template.

Furthermore, while the example where the selection processing is performed in the first to fifth embodiments based on the difference from the average value of the height on the screen, the difference may be excluded from the pedestrian candidates in the case of a large variance value.

(Effects of the Invention)

The embodiments described above can achieve the following effects.

In the above embodiments, the height dimension as appears on the image for the body height of the pedestrian is determined according to the distance between the infrared camera and the pedestrian. Moreover, the height-direction position of the feet of the pedestrian as appears on the image is also determined according to the distance between the infrared camera and the pedestrian. Thus, for the pedestrian candidates correlated with the common template, the feet height position and height dimension thereof as appears on the image are set to be approximately constant.

Therefore, the height of the pedestrian candidate is likely to be close to the average value in the case of the image of the pedestrian, and is likely to deviate from the average value in the case of the image of other than the pedestrian. The selection unit determines whether or not the multiple pedestrian candidates are suitable based on the average value of height of the pedestrian candidates as appears on the image and the height of each pedestrian candidate as appears on the image. Then, unsuitable pedestrian candidates are excluded.

Since the candidates determined to be unsuitable based on the average value of height of the multiple pedestrian candidates and the height of each pedestrian candidate are excluded from the pedestrian candidates, detection accuracy can be improved. Moreover, since the selection of the pedestrian candidates is performed based on the heights of the pedestrian candidates and the average value thereof, the processing is facilitated. Furthermore, the improved detection accuracy of the pedestrian described above can be realized without further increasing the system throughput or adding a new function (calibration) or process restrictions (i.e., improving the mounting accuracy).

When there are multiple pedestrians, images of the pedestrians are horizontally arranged at the same height if the pedestrians are at the same distance from the vehicle. The images of the pedestrians horizontally arranged as described above have high correlation values with the common template when template matching is performed.

When there are multiple templates, multiple pedestrian candidates are divided into groups for the respective templates highly correlated therewith. Then, for each group, it is determined whether or not the pedestrian candidates are suitable based on the difference between the average value and the height data. Thus, more accurate pedestrian determination can be performed compared with the configuration in which the pedestrian candidates are not divided into groups for each template.

In the configuration in which the pedestrian candidates are divided into groups for each correlated template, when only one pedestrian candidate based on the image of other than the pedestrian is detected, the average value may be the one deviating from the value indicating the position of the pedestrian.

Therefore, the pedestrian candidates are divided into groups for each correlated template, and the overall reference height is obtained from the average value of the groups including multiple pedestrian candidates. When there are multiple pedestrian candidates as described above, the group of the pedestrian candidates is likely to include the image of the pedestrian, and the overall reference height set based on the average value is likely to indicate the height of the image of the pedestrian rather than the overall reference height set based on the average value of only the non-pedestrian. Moreover, as described above, for the pedestrians whose distances from the own vehicle approximately coincide with each other, the heights thereof on the image also approximately coincide with each other. Thus, between the groups having different correlated templates, the difference in height as appears on the screen is set to be approximately constant. Accordingly, the difference in height as appears on the screen between the groups can be set in advance based on the installation height of the infrared camera or the size of the template.

When the overall reference height is set based on the pedestrian candidates in one of the groups as described above, the group reference height that is the reference height of the other group can also be set.

As described above, the overall reference height is obtained from the average value of the groups including multiple pedestrian candidates, the group reference height is set based on the overall reference height, and the selection is performed based on the difference between the group reference height and the height of the pedestrian candidates. Thus, even for the group including only one pedestrian candidate based on the non-pedestrian, the group reference height is set without being influenced by the height data of the pedestrian candidates based on the non-pedestrian. As a result, false detection can be further suppressed.

In the above embodiments, the average value and the overall reference height are set based on the group correlated with the smallest template among the groups including multiple pedestrian candidates. Specifically, when templates of different sizes are used, generally, the larger the template, the more the appearance position of the maximum correlation value varies. Therefore, the use of the average value of the pedestrian candidates correlated with the smallest template makes it possible to suppress the influence of such a variation in setting of the overall reference height.

Thus, by obtaining the average value of the pedestrian candidates from the group highly correlated with the smallest template among the groups including more pedestrian candidates than a set value set in advance, the influence of a variation in the appearance position can be reduced, and the detection accuracy can be improved, compared with the configuration in which the overall reference height is set based on the average value of the group correlated with a relatively large template.

Moreover, the group reference height that is the reference of each group is obtained based on the overall reference height set from the average value of each group, and it is determined whether or not the candidates are suitable based on the difference from the group reference height. Thus, even if the group includes only one pedestrian candidate based on the image of the non-pedestrian, the group reference height can be properly set.

To be more specific, since the overall reference height is set based on the average value of all the groups, a variation caused by the image of the non-pedestrian can be suppressed when most of the pedestrian candidates are based on the image of the pedestrian. The group reference height is set based on the overall reference height thus set. Thus, even if a certain group includes only one pedestrian candidate based on the non-pedestrian image, the group reference value can be properly set without being influenced by such a pedestrian candidate. If the height of the pedestrian candidate based on the non-pedestrian image deviates from the group reference height, the candidate is determined to be unsuitable and excluded.

In this way, the group reference height can be properly set and thus the detection accuracy of the pedestrian can be improved.

When the mounting height of the infrared camera is set in the center position (approximately half the body height) in the height direction of the pedestrian, the center of the pedestrian is located at the center of the image captured in its height direction. Therefore, regardless of the vertical dimension of the template, the center of the pedestrian candidate in its height direction is also located near the center of the image in its height direction. Accordingly, regardless of a difference in the vertical dimension of the template, it is possible to determine whether or not the pedestrian candidates are disposed at suitable positions based on the difference between the average value of height of all the pedestrian candidates and the height of each pedestrian candidate.

Since the determination is made based on the average value of height of all the pedestrian candidates as described above, the influence on the average value can be reduced and thus the detection accuracy can be improved even when the non-pedestrian image is included as the pedestrian candidate.

The addition of the determination of a child makes it possible to provide a passenger such as a driver with more accurate information. Furthermore, since the determination of a child is made based on only the vertical dimension of the pedestrian candidate, the determination can be easily performed.

INDUSTRIAL APPLICABILITY

As described above, while the description has been given of the embodiments in which the present invention is applied to the detection system for detecting a pedestrian from a vehicle, the present invention is not limited to the embodiments described above but may be applied to a system for detecting parts in a production line, for example.

## EP 2 487 647 A1

**Claims**

1. A pedestrian detection system comprising:

an imaging device installed in a vehicle to capture images around the vehicle; and
a pedestrian detection device for detecting pedestrians based on an image captured and obtained by the imaging device,
wherein

the pedestrian detection device includes:

a correlation value detection unit for performing matching between the image obtained by the imaging device and a pre-stored template for an outline of a pedestrian, and obtaining a correlation value with the template;
a high correlation region detection unit for detecting image regions in the image obtained by the imaging device as pedestrian candidates, the image regions each having the correlation value indicating a high probability that the image region is a pedestrian; and
a selection unit for obtaining an average value of height of a plurality of pedestrian candidates as appears on the image, determining whether or not each pedestrian candidate is suitable on the basis of the average value and the height of the each pedestrian candidate as appears on the image, and performing selection processing for excluding unsuitable pedestrian candidates from the pedestrian candidates.

2. The pedestrian detection system according to claim 1, wherein the correlation value detection unit includes a plurality of templates of different dimensions in the height direction of the image, and the selection unit performs, in the selection processing, processing of dividing the plurality of pedestrian candidates into groups for the respective templates highly correlated therewith, obtaining the average value for each of the groups, and excluding an unsuitable candidate, from the pedestrian candidates, for which the difference between the average value and the height of the pedestrian candidate included in the group is outside a preset range.

3. The pedestrian detection system according to claim 1, wherein the correlation value detection unit includes a plurality of templates of different dimensions in the height direction of the image, and the selection unit performs, in the selection processing, processing of dividing the plurality of pedestrian candidates into groups for the respective templates highly correlated therewith, obtaining an overall reference height from an average value of a certain group including a plurality of pedestrian candidates among the groups, setting a group reference height corresponding to each group based on the overall reference height, and excluding an unsuitable candidate, from the pedestrian candidates, for which the difference between the group reference height and the height of the pedestrian candidate is outside a preset range.

4. The pedestrian detection system according to claim 3, wherein, in the selection processing, the selection unit obtains the average value from the group highly correlated with the smallest template among the groups including more pedestrian candidates than a set value set in advance.

5. The pedestrian detection system according to claim 1, wherein the correlation value detection unit includes a plurality of templates of different dimensions in the height direction of the image, and the selection unit performs processing of dividing the plurality of pedestrian candidates into groups for the respective templates highly correlated therewith, obtaining an average value of height of the pedestrian candidates for each of the groups, setting an overall reference height based on the average value, obtaining a group reference height of each group based on the overall reference height, and excluding an unsuitable candidate, from the pedestrian candidates, for which the difference between the group reference height and the height of the pedestrian candidate included in the group is outside a preset range.

6. The pedestrian detection system according to claim 1, wherein the infrared camera is installed at a height that can be recognized as the center position in the height direction of the pedestrian, and the selection unit performs processing of obtaining a determination reference value that is an average value of height data of all the pedestrian candidates, and excluding an unsuitable candidate, from the pedestrian candidates, for which the difference between the determination reference value and the height of the pedestrian candidate is outside a preset range.

7. The pedestrian detection system according to claim 1, wherein the pedestrian candidate that is low within a set range is determined to be a child based on the average value.

# FIG.1

10 — INFRARED CAMERA

20 — PEDESTRIAN DETECTION DEVICE

100

30 — PEDESTRIAN POSITION DISPLAY UNIT

40 — IMAGE DISPLAY UNIT

# FIG.2

20

21 — BRIGHTNESS ADJUSTMENT UNIT

22 — EDGE DETECTION UNIT

24 — CORRELATION VALUE DETECTION UNIT

25 — CORRELATION REGION MAXIMUM VALUE DETECTION UNIT

26 — SELECTION UNIT

23 — PEDESTRIAN TEMPLATE UNIT

# FIG.3

T1 T2 T3

# FIG.4

# FIG.5

24

FIRST TEMPLATE T1

24a     24d

| FIRST CORRELATION MAP CREATION UNIT | → | FIRST MAXIMUM VALUE AND POSITION EXTRACTION UNIT |

SECOND TEMPLATE T2

24b     24e

IMAGE INPUT →

| SECOND CORRELATION MAP CREATION UNIT | → | SECOND MAXIMUM VALUE AND POSITION EXTRACTION UNIT |

THIRD TEMPLATE T3

24c     24f

| THIRD CORRELATION MAP CREATION UNIT | → | THIRD MAXIMUM VALUE AND POSITION EXTRACTION UNIT |

25

CORRELATION REGION MAXIMUM VALUE DETECTION UNIT

# FIG.6A

| CORRELATION CHART 1 | | |
| --- | --- | --- |
| CORRELATION VALUE | POSITION | |
| | x | y |
| nnn | n | n |
| nnn | n | n |
| nnn | n | n |
| nnn | | |

| CORRELATION CHART2 | |
| --- | --- |
| POSITION | |
| x | y |
| n | n |
| n | n |
| n | n |

| CORRELATION CHART3 | |
| --- | --- |
| POSITION | |
| x | y |
| n | n |
| n | n |
| n | n |

→ TO FIG. 6B

# FIG.6B

SUMMARY

| CORRELATION VALUE | POSITION | |
|---|---|---|
| | x | y |
| 0.956 | 244 | 129 |
| 0.915 | 242 | 126 |
| 0.864 | 108 | 122 |
| 0.794 | 157 | 119 |
| 0.788 | 165 | 128 |

FROM FIG. 6A→

→ ×PROXIMITY → TO FIG. 6C

→ ×THRESHOLD

# FIG.6C

RESULT

| CORRELATION VALUE | POSITION | |
|---|---|---|
| | x | y |
| 0.956 | 244 | 129 |
| 0.864 | 108 | 122 |
| — | — | — |

FROM FIG. 6B→

# FIG.7

Lin

MK(a) MK(b) MK(c) MK(d) MK(e)

# FIG.8

```
                    START

              READ PEDESTRIAN CANDIDATES        S1

     CALCULATE AVERAGE Y FROM HEIGHT DATA (y VALUE)    S2


     COMPARE AVERAGE Y WITH HEIGHT DATA (y VALUE)       S3
        (CALCULATE DIFFERENCE ABSOLUTE VALUE DY)

                                              S4
              COMPARE DIFFERENCE
              ABSOLUTE VALUE DY        ≧
              WITH THRESHOLD TH                  S5

                        <             DELETE
                                    CORRELATION
                                     LIST DATA

                                              S6
      NO
         COMPLETE ALL DATA PROCESSING?

                     YES

                     END
```

# FIG.9A

MK(a-1)

## FIG.9B

Lb

MK(b-1)    MK(b-2)

## FIG.9C

Lc

MK(c-1)    MK(c-3)

MK(c-2)

## FIG.10

Dcb  Dca

LC

LB

LA

# FIG.11

```
        ( START )
           │
           ▼
┌──────────────────────────────────────┐
│ CALCULATE OVERALL REFERENCE LINE (LZ) │──── S210
└──────────────────────────────────────┘
           │
           ▼
┌──────────────────────────────────────────┐
│ CALCULATE GROUP REFERENCE LINES (LA, LB, LC) │──── S220
└──────────────────────────────────────────┘
           │
           ▼
┌──────────────────────────────────────────┐
│         EXECUTE EXCLUSION PROCESSING      │──── S230
│  ON UNNECESSARY CORRELATION LIST DATA SET │
└──────────────────────────────────────────┘
           │
           ▼
        (  END  )
```

# FIG.12

```
                    ( START )
                        │
                        ▼
┌────────────────────────────────────────────────┐
│ READ CORRELATION LIST DATA OF SMALLEST TEMPLATE │──── S211
└────────────────────────────────────────────────┘
                        │
                        │       ┌──────────────────────────────┐
                        │       │  READ CORRELATION LIST DATA   │──── S213
                        │       │  OF SECOND SMALLEST TEMPLATE  │
                        ▼       └──────────────────────────────┘
         S212                            ▲
          ╱────────────────────╲         │
         ╱  NUMBER OF CORRELATION ╲       │
        ⟨   LIST DATA SETS          ⟩ NO ─┘
         ╲   IS n OR MORE?        ╱
          ╲────────────────────╱
                   │ YES
                   ▼
┌────────────────────────────────────────┐
│ CALCULATE OVERALL REFERENCE LINE LZ     │──── S214
│                                         │
│         LZ= (La+Lb+Lc) / 3              │
└────────────────────────────────────────┘
                   │
                   ▼
                ( END )
```

$$LZ = \frac{La + Lb + Lc}{3}$$

# FIG.13

START

RETRIEVE GROUP REFERENCE LINES
(LA, LB, LC) (Y VALUE) — S231

INDIVIDUALLY RETRIEVE EACH CORRELATION LIST DATA SET — S232

CALCULATE DIFFERENCE ABSOLUTE VALUE
DY BETWEEN y VALUE
AND GROUP AVERAGE VALUES (Ya, Yb, Yc)
$DY = |y - Y|$ — S233

COMPARE DIFFERENCE
ABSOLUTE VALUE DY WITH
THRESHOLD TH — S234

$<$

$\geqq$

EXCLUDE CORRELATION
VALUE LIST DATA SET — S235

NO — PROCESSING OF ALL DATA IS COMPLETED? — S236

YES

END

# FIG.14

START

CALCULATE AVERAGE HEIGHT OF
EACH CORRELATION LIST DATA SET
(Ya, Yb, Yc VALUES) — S310

CALCULATE OVERALL REFERENCE LINE LZb — S320

CALCULATE FIRST TO THIRD GROUP REFERENCE LINES LA, LB, LC — S330

EXECUTE EXCLUSION PROCESSING
ON UNNECESSARY CORRELATION LIST DATA SET — S340

END

# FIG.15

START

READ AVERAGE HEIGHT OF
EACH CORRELATION LIST DATA SET
(Ya, Yb, Yc VALUES) — S321

S322

S322a

CALCULATE FIRST TEMPORARY
REFERENCE LINE
$La=Ya+Da$

S322c

CALCULATE THIRD TEMPORARY
REFERENCE LINE
$Lc=Yc+Dc$

S322b

CALCULATE SECOND
TEMPORARY REFERENCE LINE
$Lb=Yb+Db$

CALCULATE OVERALL REFERENCE LINE — S323

$$LZb=\frac{La+Lb+Lc}{3}$$

END

# FIG.16A

La

Da

Ya
(LA)

MK(a-1)    MK(a-2)

# FIG.16B

Lb

Db

Yb
(LB)

MK(b-1)    MK(b-3)

MK(b-2)

# FIG.16C

Lc (≒LZb)

Dc

Yc
(LC)

MK(c-1)    MK(c-2)

# FIG.17

# FIG.18

LK

MK(d-1)

MK(d-2)

MK(d-3)

MK(d-4)

MK(d-5)

△TH
△TH

# FIG.19

```
        ┌──────────┐
        │  START   │
        └──────────┘
              │
┌──────────────────────────────────────┐
│  READ EACH CORRELATION LIST DATA SET  │──── S410
└──────────────────────────────────────┘
              │
┌──────────────────────────────────────┐
│      CALCULATE AVERAGE HEIGHT Y       │──── S420
└──────────────────────────────────────┘
              │
┌──────────────────────────────────────┐
│  CALCULATE OVERALL REFERENCE LINE LK  │──── S430
└──────────────────────────────────────┘
              │
┌──────────────────────────────────────────┐
│ EXCLUDE UNNECESSARY CORRELATION LIST DATA SET │──── S440
└──────────────────────────────────────────┘
              │
        ┌──────────┐
        │   END    │
        └──────────┘
```

## FIG.20

## INTERNATIONAL SEARCH REPORT

| International application No. |
|---|
| PCT/JP2010/067354 |

A. CLASSIFICATION OF SUBJECT MATTER
*G06T7/00*(2006.01)i, *G06T1/00*(2006.01)i, *G08G1/16*(2006.01)i, *H04N7/18*(2006.01)i

According to International Patent Classification (IPC) or to both national classification and IPC

B. FIELDS SEARCHED

Minimum documentation searched (classification system followed by classification symbols)
G06T7/00, G06T1/00, G08G1/16, H04N7/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-123113 A (Toyota Motor Corp., Denso Corp., Nippon Soken, Inc.), 29 May 2008 (29.05.2008), fig. 4, 6 & US 2010/0067740 A & EP 2050042 A & WO 2008/056261 A2 & KR 10-2009-0018154 A & CN 101558415 A | 1-7 |
| A | JP 2003-284057 A (Honda Motor Co., Ltd.), 03 October 2003 (03.10.2003), fig. 4(a), 8 to 13; paragraph [0037] & US 2003/0138133 A1 & DE 10301468 A | 1-7 |
| A | JP 2003-9140 A (Mitsubishi Motors Corp.), 10 January 2003 (10.01.2003), fig. 3(b); paragraph [0031] (Family: none) | 3-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 October, 2010 (18.10.10) | 26 October, 2010 (26.10.10) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| | International application No. |
|---|---|
| | PCT/JP2010/067354 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-314060 A  (Nissan Motor Co., Ltd.), 16 November 2006 (16.11.2006), fig. 3 (Family: none) | 6 |
| P,A | JP 2010-136207 A  (Clarion Co., Ltd.), 17 June 2010 (17.06.2010), entire text (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003009140 A